# NOUVEAU FASCICULE DE BREVET EUROPEEN

(11) **EP 1 550 603 B2**
(45) Date de publication et mention de la décision concernant l'opposition: **23.03.2016**
(45) Mention de la délivrance du brevet: 25.02.2009
(21) Numéro de dépôt: 04293163.4
(22) Date de dépôt: 29.12.2004
(51) Int. Cl.: B62D 29/00, B62D 25/06, B62D 25/16, B62D 25/10, B62D 65/00, B62D 27/02

(54) **Procédé de fabrication d'une pièce de carrosserie de véhicule automobile, pièce de carrosserie**
Produktionsverfahren für ein Karrosseriebauteil, und Karrosseriebauteil
Method for making a body part, body part

(30) Priorité: 02.01.2004 FR 0400013; 13.02.2004 FR 0401488
(43) Date de publication de la demande: 06.07.2005
(73) Titulaire: COMPAGNIE PLASTIC OMNIUM, 69007 Lyon (FR)
(72) Inventeur: Andre, Gérald, 01500 Amberieu en Bugey (FR); Bonneau, Eric, 38460 Saint Romain de Jalionas (FR); Cheron, Hugues, 01800 Meximeux (FR); Lacroix, Thibault, 01500 Chateau-Gaillard (FR)
(74) Mandataire: Remy, Vincent Noel Paul

(56) Documents cités:
- EP-A2- 0 775 573
- EP-B1- 0 370 342
- WO-A-02/074608
- WO-A1-00/56517
- WO-A1-2005/032793
- DE-C- 19 934 545
- FR-A- 2 793 438
- US-A1- 2003 173 801
- US-B1- 6 332 731
- US-B1- 6 421 979

## Description

La présente invention concerne un procédé de fabrication d'une pièce de carrosserie de véhicule automobile, une pièce de carrosserie, une aile, une portière et un hayon de véhicule automobile.

On sait qu'il est intéressant, dans l'industrie automobile, d'encombrer le moins possible la chaîne principale de montage, et donc de développer des modules équipés prêts à monter. Ces modules équipés sont par exemple des pièces de carrosserie sur lesquelles sont fixés des organes fonctionnels, en matière plastique, tels que des renforts, des moyens de fixation de la pièce de carrosserie sur le véhicule, des cales, des projecteurs.

Parmi les moyens de fixation de ces différents organes fonctionnels sur la pièce de carrosserie, on connaît déjà dans l'état de la technique des colles spécifiques adaptées à la tôle de la pièce de carrosserie.

Le document FR2793438 divulgue un élément hybride métal/plastique. La pièce métallique est muni d'un agent d'adhérence puis est emboutie. L'agent d'adhérence sert d'interface de liaison pour un élément de renfort surmoulé en matière thermoplastique.

Le problème consiste en ce que le collage de ces différentes pièces nécessite de mettre en place la colle à des endroits précis, ce qui est coûteux en main d'oeuvre. De plus, lorsque l'on souhaite fixer une pièce sur la pièce de carrosserie déjà emboutie, certaines zones sont particulièrement difficiles à atteindre, ce qui augmente la difficulté de réalisation de ces pièces de carrosserie équipées. Par ailleurs, si l'on utilise un moyen de fixation autre que la colle, la pièce de carrosserie est fragilisée à cause de liaisons ponctuelles.

La présente invention vise à remédier à ces inconvénients en proposant un procédé de fabrication d'une pièce de carrosserie grâce auquel le collage d'organes fonctionnels sur la pièce de carrosserie est particulièrement facilité et accéléré.

A cet effet, l'invention a pour objet un procédé de fabrication d'une pièce de carrosserie de véhicule automobile, comportant une nappe métallique, que l'on met en forme la nappe métallique préalablement enduite d'un revêtement de surface pouvant servir d'interface de liaison mécanique avec une matière thermoplastique, que l'on surmoule la nappe pré-enduite avec une matière thermoplastique pour laquelle le revêtement de surface sert d'interface de liaison, et qui est destinée à constituer un organe, **caractérisé en ce que** une plage de la nappe métallique enduite du revêtement de surface, dite plage libre, n'est pas couverte par l'organe en matière thermoplastique et en ce qu'on utilise un produit compatible avec la matière plastique de l'organe comme revêtement de surface ; et que l'on utilise, pour l'organe, une matière plastique ayant un produit commun avec le revêtement de surface enduit sur la nappe métallique.

Ainsi, un tel procédé permet d'obtenir une pièce de carrosserie mise en forme et comportant déjà une couche de colle. Comme toute la pièce métallique est enduite, les opérateurs n'ont plus besoin de rapporter de la colle pour chaque organe qu'ils souhaitent ultérieurement fixer sur la pièce de carrosserie.

De plus, le revêtement de surface enduit sur la nappe permet de protéger la pièce ou une partie de cette pièce de la corrosion.

Selon un mode de mise en oeuvre, on utilise un matériau réactivable, de préférence à chaud, comme revêtement de surface. Ainsi, ce matériau ne réagit qu'à une certaine température, telle que la température à laquelle est injectée la matière thermoplastique de l'organe, ce qui permet de mettre nappe métallique en forme sans que le revêtement de surface ne se lie aux outils de mise en forme.

Une fois la pièce de carrosserie pré-enduite mise en forme, on peut rapporter de la matière thermoplastique constituant un organe, de deux façons. Soit on sur-moule la nappe pré-enduite avec une matière thermoplastique pour laquelle le revêtement de surface sert d'interface de liaison, et qui est destinée à constituer un organe. Soit on réactive le revêtement de surface et on rapporte un organe réalisé en une matière thermoplastique pour laquelle le revêtement de surface sert d'interface de liaison.

Selon l'invention, une plage de la nappe métallique enduite du revêtement de surface, dite plage libre, n'est pas couverte par l'organe en matière thermoplastique. Cette plage libre peut servir d'interface de liaison avec un autre composant que l'organe. Ainsi, il est possible, en réactivant à nouveau la plage libre, de la faire réagir de façon que le revêtement de surface puisse servir de moyens de fixation d'un autre élément

Eventuellement, on utilise un organe choisi parmi l'un au moins des éléments de l'ensemble constitué d'une doublure, d'un moyen de fixation, d'un moyen de renfort, d'un écran acoustique, d'un moyen d'accostage de la pièce de carrosserie, d'une cale. Ainsi, le procédé défini par l'invention permet de fixer facilement des renforts, par exemple anti-vibratoires, phoniques, thermiques, des moyens de fixation de la pièce de carrosserie sur le véhicule, ou d'un projecteur sur la pièce de carrosserie, tous ces organes pouvant être fixés sur la pièce de carrosserie à moindre poids et à moindre coût.

Selon un premier mode de mise en oeuvre, l'enduction préalable de la nappe métallique avec le revêtement de surface est exécutée dès la fabrication de la nappe métallique, par exemple sous la forme d'une tôle. La tôle pré-enduite est ultérieurement mise en forme et la matière thermoplastique de l'organe est rapportée sur la tôle pré-enduite mise en forme, conformément à l'Invention.

Selon un second mode de mise en oeuvre, l'enduction préalable de la nappe métallique est exécutée immédiatement avant la mise en forme de la nappe métallique. Un procédé selon l'invention peut en outre comporter l'une ou plusieurs des caractéristiques suivantes :
- on favorise l'adhérence de l'organe sur le revêtement de surface en utilisant une nappe métallique ayant un revêtement de surface comportant un produit liant, ce revêtement étant lui-même recouvert, du côté opposé à la nappe métallique, d'un film en matière thermoplastique réalisé dans le même matériau que l'organe ;
- l'organe surmoulé ou rapporté est en polypropylène ou polyamide ;
- le revêtement de surface enduit sur la nappe métallique comporte du polypropylène ou du polyamide ; et
- la mise en forme de la nappe métallique comprend une étape de pliage ou d'emboutissage.

La présente invention concerne également une pièce de carrosserie d'un véhicule automobile obtenue par mise en oeuvre d'un procédé tel que précédemment décrit.

Cette pièce de carrosserie peut être une aile, une portière, un hayon, un capot, un toit.

L'invention sera mieux comprise à la lecture de la description qui va suivre, donnée uniquement à titre d'exemple et faite en se référant aux figures annexées dans lesquelles :
- la figure 1 est une vue de l'intérieur d'une aile de véhicule automobile selon l'invention ;
- la figure 2 est une section d'une aile de véhicule automobile selon un deuxième mode de réalisation de l'invention ;
- la figure 3 est une vue en perspective de l'avant d'une aile de véhicule automobile selon un troisième mode de réalisation de l'invention ; et
- la figure 4 est une coupe d'une aile de véhicule automobile selon un quatrième mode de réalisation.

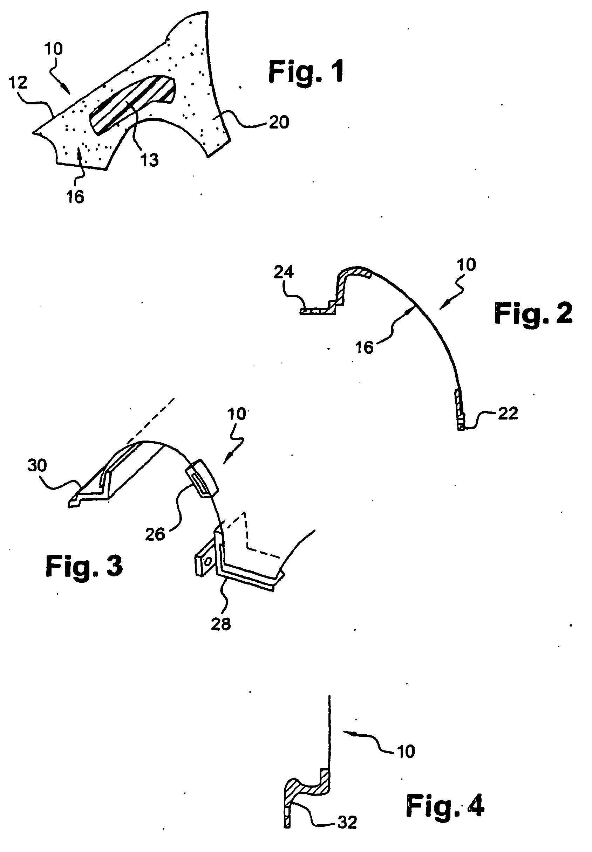

La pièce de carrosserie 10 représentée sur la figure 1 est une aile avant de véhicule automobile. Cette aile 10 comporte une nappe métallique 12, réalisée par emboutissage d'une tôle.

L'aile 10 comporte également, sur sa surface intérieure, un exemple d'organe selon l'invention, qui est un organe fonctionnel constituant un renfort vibro-acoustique central 13, réalisé dans un matériau thermoplastique tel que le polypropylène.

Pour lier la nappe métallique 12 et l'organe fonctionnel 13, la nappe est recouverte par un revêtement de surface 16, servant d'interface de liaison mécanique avec le renfort 13.

Ce revêtement de surface 16 permet en outre de réaliser, partiellement ou entièrement, une protection anti-corrosion de la pièce de carrosserie 10.

Le revêtement de surface 16 est réalisé dans un matériau qui présente les caractéristiques suivantes :
- il est thermoréactif, c'est-à-dire qu'il acquiert des propriétés de d'adhérence à une certaine température ;
- il est apte à coller des matériaux métalliques, comme les colles connues dans l'état de la technique, pour coller des pièces de structure métallique, telles que le capot et la doublure de capot, ou la hayon et la doublure de hayon, vendues notamment par la société Henkle ;
- il contient du polypropylène.

L'assemblage de la nappe métallique 12 et du renfort 13 s'effectue de la façon suivante.

Dans une première étape, la nappe métallique est pré-enduite, au moins sur toute sa surface Intérieure, du revêtement de surface 16. Cette première étape est réalisée dès la fabrication de la tôle, avant sa commercialisation.

Dans une deuxième étape, la nappe 12, pré-enduite du revêtement 16, est découpée et conformée par emboutissage ou pliage, afin de prendre la forme représentée sur la figure 1.

Dans une troisième étape, la tôle ainsi préparée est placée dans un moule dans lequel est injecté du polypropylène de façon former le renfort 13.

Lors de ce surmoulage, le polypropylène est injecté à une température relativement élevée, de façon qu'il soit liquide. Cette température est par ailleurs suffisamment élevée pour faire réagir le matériau composant la couche d'interface 16.

Par ailleurs comme le matériau du revêtement de surface 16 comporte du polypropylène, celui-ci est compatible avec le polypropylène injecté pour mouler le renfort 13.

Par conséquent, lorsque le polypropylène entre en contact, dans le moule, avec le revêtement de surface 16, celui-ci réagit de façon à créer une liaison entre le renfort 13 et la nappe métallique 12.

. Ainsi, comme on peut le voir sur l'aile de la figure 1 obtenue après l'injection, on obtient une pièce de carrosserie dans laquelle la couche d'interface 16 et la matière thermoplastique injectée ont fusionné de façon à assurer une liaison continue de la matière plastique du renfort 13 et de la nappe métallique 12.

Eventuellement, selon un mode de réalisation non représenté, le revêtement de surface 16 est recouvert, avant le surmoulage, par un film de polypropylène, de façon à favoriser l'accroche du polypropylène composant l'organe fonctionnel 13.

On peut voir que, comme la nappe 12 est pré-enduite sur toute la surface du revêtement 16, certaines zones 20 non couvertes par la matière plastique lors de l'injection n'ont pas réagi et ne sont pas couvertes par la matière plastique. Par conséquent, ces plages 20 restées libres, comportant le revêtement de surface 16, peuvent être ultérieurement réactivées à la chaleur, de façon à pouvoir fixer d'autres composants sur la pièce de carrosserie 10.

L'organe fonctionnel 13 décrit sur la figure 1 est un renfort vibro-accoustique central. Cependant, on peut rapporter d'autres types d'organes sur l'aile 10. En effet, l'organe peut être un moyen de fixation d'une pièce rapportée sur l'aile 10 ; un moyen de renfort intérieur, éventuellement nervuré, anti-vibratoire, phonique ou thermique ; un écran acoustique ou thermique ; un moyen d'accostage de l'aile 10 avec une autre pièce de carrosserie, par exemple une arche de roue ou un pare-chocs ; un moyen de calage, fusible ou non, pour contrôler les jeux de carrosserie ; un moyen de positionnement d'une vitre de projecteur par rapport à la pièce de carrosserie ; ou encore un moyen de fixation d'un projecteur sur la pièce de carrosserie.

On peut voir des exemples d'organes fonctionnels sur les figures 2 à 4.

Sur la figure 2, l'aile 10 comporte un moyen 22 d'accostage d'un passage de roue, et un moyen 24 de fixation du haut de l'aile sur la structure du véhicule, de façon que l'aile 10 soit mise en référence par rapport au capot du véhicule.

Sur la figure 3, on peut voir que l'aile 10 comporte, sur sa partie avant destinée à être en contact avec les projecteurs du véhicule un moyen 26 de mise en référence du projecteur par rapport à l'aile 10, un moyen 28 d'accostage du pare-chocs et de l'aile 10 et un moyen 30 de fixation de l'aile 10 à la structure du véhicule.

Enfin, on peut voir sur la figure 4 que l'aile 10 peut comporter un moyen 32 de fixation de celle-ci sur un pied avant de véhicule, de façon à l'aligner avec une portière avant du véhicule.

Ainsi, grâce à l'invention, on peut rapporter facilement, en réactivant le revêtement de surface 16, des éléments sur l'intérieur de l'aile 10, sans avoir à se soucier d'un positionnement systématique d'une colle pour chaque organe rapporté.

Outre le fait de simplifier au maximum les étapes de mise en forme de la pièce de carrosserie ainsi fabriquée, un procédé selon l'invention a l'avantage de réduire les coûts de fabrication de cette pièce. En effet, comme on peut rapporter facilement des organes fonctionnels en matière plastique, la nappe métallique 12 de la pièce de carrosserie a essentiellement une fonction esthétique, donnant une impression de qualité, de résistance, et un aspect propre au métal. Par conséquent, le module fabriqué, constitué par la pièce de carrosserie et ses organes, est moins lourd et également moins cher, puisque la matière plastique utilisée est fonctionnelle plutôt qu'esthétique, donc moins spécifique et moins chère.

On obtient en outre, en une seule pièce de carrosserie, une aile munie de moyens d'accostage et de moyens de renfort lui conférant une rigidité, sur laquelle il est facile d'intégrer des fonctions, tout ceci diminuant globalement le poids de cette pièce de carrosserie équipée.

## Revendications

1. Procédé de fabrication d'une pièce de carrosserie de véhicule automobile, comportant une nappe métallique (12), au cours duquel l'on met en forme la nappe métallique (12) préalablement enduite d'un revêtement de surface (16) pouvant servir d'interface de liaison mécanique avec une matière thermoplastique, l'on surmoule la nappe (12) pré-enduite avec une matière thermoplastique pour laquelle le revêtement de surface sert d'interface de liaison, et qui est destinée à constituer un organe (13, 22, 24, 26, 28, 30, 32), **caractérisé en ce que** une plage de la nappe métallique (12) enduite du revêtement de surface (16), dite plage libre, n'est pas couverte par l'organe (13, 22, 24, 26, 28, 30, 32) en matière thermoplastique, et **en ce que** l'on utilise un produit compatible avec la matière plastique de l'organe (13, 22, 24, 26, 28, 30, 32) comme revêtement de surface (16), et que l'on utilise, pour l'organe (13, 22, 24, 26, 28, 30, 32), une matière plastique ayant un produit commun avec le revêtement de surface (16) enduit sur la nappe métallique.

2. Procédé selon la revendication 1, dans lequel on utilise un matériau réactivable comme revêtement de surface (16).

3. Procédé selon la revendication 2, dans lequel on réactive le revêtement de surface (16) et on rapporte un organe (13, 22, 24, 26, 28, 30, 32) réalisé en une matière thermoplastique pour laquelle le revêtement de surface (16) sert d'interface de liaison.

4. Procédé selon l'une quelconque des revendications 1 à 3, dans lequel on favorise l'adhérence de l'organe (13, 22, 24, 26, 28, 30, 32) sur le revêtement de surface (16) en utilisant une nappe métallique (12) ayant un revêtement de surface (16) comportant un produit liant, ce revêtement étant recouvert, du côté opposé à la nappe métallique (12), d'un film en matière thermoplastique réalisé dans le même matériau que l'organe (13, 22, 24, 26, 28, 30, 32).

5. Procédé selon l'une quelconque des revendications 1 à 4, dans lequel l'organe (13, 22, 24, 26, 28, 30, 32) surmoulé ou rapporté est en polypropylène ou polyamide.

6. Procédé selon l'une des revendications 1 à 5, dans lequel la plage libre sert d'interface de liaison avec un autre composant (22, 24, 26, 28, 30) que l'organe (13, 22, 24, 26, 28, 30, 32).

7. Procédé selon l'une quelconque des revendications 1 à 6, dans lequel on utilise un organe (13, 22, 24, 26, 28, 30, 32) choisi parmi l'un au moins des éléments de l'ensemble constitué d'une doublure, d'un moyen de fixation, d'un moyen de renfort, d'un écran acoustique, d'un moyen d'accostage de la pièce de carrosserie, d'une cale.

8. Procédé selon l'une quelconque des revendications 1 à 7, dans lequel l'enduction préalable da la nappe métallique (12) avec le revêtement de surface (16) est exécutée dès la fabrication de la nappe métallique (12).

9. Procédé selon l'une quelconque des revendications 1 à 7, dans lequel l'enduction préalable de la nappe métallique (12) avec le revêtement de surface (16) est exécutée immédiatement avant la mise en forme de la nappe métallique (12).

10. Procédé selon l'une quelconque des revendications 1 à 9, dans lequel le revêtement de surface (16) enduit sur la nappe métallique (12) comporte du polypropylène ou du polyamide.

11. Procédé selon l'une quelconque des revendications 1 à 10, dans lequel la mise en forme de la nappe métallique (12) comprend une étape de pliage ou d'emboutissage.

12. Pièce de carrosserie (10) de véhicule automobile fabriquée par mise en oeuvre du procédé selon l'une quelconque des revendications 1 à 11.

13. Aile (10) de véhicule automobile selon la revendication 12.

14. Portière de véhicule automobile selon la revendication 12.

15. Hayon de véhicule automobile selon la revendication 12.

16. Capot de véhicule automobile selon la revendication 12.

17. Toit de véhicule automobile selon la revendication 12.

## Patentansprüche

1. Herstellungsverfahren für ein Kraftfahrzeug-Karosserieteil, das eine metallischen Bahn (nappe metallique) (12) aufweist, die im Wesentlichen eine ästhetische Funktion hat, dass man die metallische Bahn (12) in eine Form bringt, die zuvor mit einem Oberflächenbelag (16) beschichtet worden ist, der als mechanische Verbindungszwischenschicht zu einem thermoplastischen Material dienen kann, dass man auf der vorab beschichteten Bahn ein thermoplastisches Material aufpresst, für das der Oberflächenbelag als Verbindungszwischenschicht dient und die dafür vorgesehenen ist, ein Element (13, 22, 24, 26, 28, 30, 32) zu bilden, **dadurch gekennzeichnet, dass** ein Bereich der mit dem Oberflächenbelag (16) beschichteten metallischen Bahn (12), als freier Bereich bezeichnet, nicht von dem Element (13, 22, 24, 26, 28, 30, 32) aus thermoplastischem Material bedeckt ist, dass man ein Produkt einsetzt, das mit dem thermoplastischen Material des Elements (13, 22, 24, 26, 28, 30, 32) als Oberflächenbelag (16) kompatibel ist und dass man für das Element (13, 22, 24, 26, 28, 30, 32) einen Kunststoff verwendet, der ein gemeinsamen Produkt mit dem auf der Bahn aufgebrachten Oberflächenbelag (16) aufweist.

2. Verfahren nach Anspruch 1, bei dem man als Oberflächenbelag (16) ein reaktivierbares Material verwendet.

3. Verfahren nach Anspruch 2, bei dem man den Oberflächenbelag (16) reaktiviert und ein aus einem thermoplastischen Material hergestelltes Element, für das der Oberflächenbelag (16) als Verbindungszwischenschicht dient, aufbringt.

4. Verfahren nach einem der Ansprüche 1 bis 3, bei dem man dem Haftvermögen des Elements (13, 22, 24, 26, 28, 30, 32) an dem Oberflächenbelag den Vorzug gibt, indem man eine metallischen Bahn (12) mit einem Oberflächenbelag verwendet, der ein Bindeprodukt beinhaltet, wobei dieser Belag auf der der metallischen Bahn (12) gegenüberliegenden Seite mit einem Film aus thermoplastischen Material bedeckt ist, das aus demselben Material wie das Element (13, 22, 24, 26, 28, 30, 32) hergestellt ist.

5. Verfahren nach einem der Ansprüche 1 bis 4, bei dem das aufgepresste oder aufgebrachte Element (13, 22, 24, 26, 28, 30 32) aus Polypropylen oder Polyamid besteht.

6. Verfahren nach einem der Ansprüche 1 bis 5, bei dem der freie Bereich als Verbindungszwischenschicht zu einem von dem Element (13, 22, 24, 26, 28, 30 32) verschiedenen Bauteil (22, 24, 26, 28, 30) dient.

7. Verfahren nach einem der Ansprüche 1 bis 6, bei dem man ein Element (13, 22, 24, 26, 28, 30 32) verwendet, das mindestens aus einem der Elemente der Anordnung ausgewählt wird, die aus einem der Folgenden besteht: eine Innenverkleidung, ein Befestigungsmittel, ein Verstärkungsmittel, eine Schalldämpfung, ein Mittel zum Anbringen des Karosserieteils, ein Keil.

8. Verfahren nach einem er Ansprüche 1 bis 7, bei dem das vorherige Beschichten der metallischen Bahn (12) mit dem Oberflächenbelag (16) im Zuge der Herstellung der metallischen Bahn (12) ausgeführt wird.

9. Verfahren nach einem der Ansprüche 1 bis 7, bei dem das vorherige Beschichten der metallischen Bahn (12) mit dem Oberflächenbelag (16) ausgeführt wird, unmittelbar bevor die metallische Bahn (12) in die Form gelegt wird.

10. Verfahren nach einem der Ansprüche 1 bis 9, bei der auf der metallischen Bahn aufgebrachte Oberflächenbelag (16) Polypropylen oder Polyamid aufweist.

11. Verfahren nach einem der Ansprüche 1 bis 10, bei dem das Einlegen der metallischen Bahn in die Form einen Schritt des Faltens oder des Ziehen umfasst.

12. Karosserieteil (10) eines Kraftfahrzeugs, das durch die Ausführung des Verfahrens nach einem der Ansprüche 1 bis 11 hergestellt wird.

13. Kotflügel (10) eines Kraftfahrzeugs nach Anspruch 12.

14. Tür eines Kraftfahrzeugs nach Anspruch 12.

15. Heckklappe eines Kraftfahrzeugs nach Anspruch 12.

16. Motorhaube eines Kraftfahrzeugs nach Anspruch 12.

17. Dach eines Kraftfahrzeugs nach Anspruch 12.

## Claims

1. A method of fabricating a motor vehicle bodywork part comprising a metal sheet (12), wherein the metal sheet (12) is shaped after prior coating with a surface covering (16) capable of acting as a mechanical bonding interface with a thermoplastic material, wherein a thermoplastic material is overmolded onto the pre-coated sheet (12) so that the surface covering acts as a bonding surface, in which thermoplastic material serves to constitute a member (13, 22, 24, 26, 28, 30, 32), **characterized in that** an area of the metal sheet (12) coated with the surface covering (16), said free area, is not covered by the member (13, 22, 24, 26, 28, 30, 32) of thermoplastic material, **in that** a substance that is compatible with the plastics material of the member (13, 22, 24, 26, 28, 30, 32) is used as the surface covering (16), and **in that**, for the member (13, 22, 24, 26, 28, 30, 32), a plastics material having a substance in common with the surface covering (16) coated on the metal sheet is used.

2. A method according to claim 1, in which a reactivatable material is used as the surface covering (10).

3. A method according to claim 2, in which the surface covering (16) is reactivated and a member (13, 22, 24, 26, 28, 30, 32) made of a thermoplastic material is applied thereto with the surface covering (16) acting as a bonding interface.

4. A method according to one of claims 1 to 3, in which bonding of the member (13, 22, 24, 26, 28, 30, 32) on the surface covering (16) is enhanced by using a metal sheet (12) having a surface covering (16) comprising a binder, said covering being covered on its face remote from the metal sheet (12) with a film of thermoplastics material made of the same material as the member (13, 22, 24, 26, 28, 30, 32).

5. A method according to any one of claims 1 to 4, in which the overmolded or applied member (13, 22, 24, 26, 28, 30, 32) is made of polypropylene or of polyamide.

6. A method according to one of claims 1 to 5, in which the free area acts as a bonding interface with a component (22, 24, 26, 28, 30) other than the member (13, 22, 24, 26, 28, 30, 32).

7. A method according to any one of claims 1 to 6, in which a member (13, 22, 24, 26, 28, 30, 32) is used selected from at least one of the elements in the group constituted by: a liner; fastener means; reinforcing means; a noise screen; docking means for the bodywork part; and a spacer.

8. A method according to any one of claims 1 to 7, in which the metal sheet (12) is coated with the surface covering (16) as soon as the metal sheet (12) is fabricated.

9. A method according to any one of claims 1 to 7, in which the metal sheet (12) is coated with the surface covering (16) immediately prior to the metal sheet (12) being shaped.

10. A method according to any one of claims 1 to 9, in which the surface covering (16) coated on the metal sheet (12) includes polypropylene or polyamide.

11. A method according to any one of claims 1 to 10, in which the shaping of the metal sheet (12) includes a step of folding or stamping.

12. A motor vehicle bodywork part (10) fabricated by implementing the method according to any one of claims 1 to 11.

13. A motor vehicle fender (10) according to claim 12.

14. A motor vehicle door according to claim 12.

15. A motor vehicle tailgate according to claim 12.

16. A motor vehicle hood according to claim 12.

17. A motor vehicle roof according to claim 12.
